# EUROPÄISCHE PATENTSCHRIFT

(11) **EP 2 103 476 B1**
(45) Veröffentlichungstag und Bekanntmachung des Hinweises auf die Patenterteilung: **29.08.2012**
(21) Anmeldenummer: 09002807.7
(22) Anmeldetag: 27.02.2009
(51) Int. Cl.: B60K 37/06

(54) **Headunlt für ein Kraftfahrzeug**
Head unit for a motor vehicle
Unité de tête pour véhicules automobiles

(30) Priorität: 29.02.2008 DE 102008012030
(43) Veröffentlichungstag der Anmeldung: 23.09.2009
(73) Patentinhaber: Peiker acustic GmbH & Co. KG, 61381 Friedrichsdorf (DE)
(72) Erfinder: Froidl, Andreas, 64521 Groß-Gerau (DE); Oberender, Holger, 60438 Frankfurt am Main (DE); Meurer, Werner, 61191 Rosbach (DE)
(74) Vertreter: Otten, Herbert

(56) Entgegenhaltungen:
- WO-A1-2006/125515
- DE-A1- 10 141 190
- DE-A1- 10 308 897
- US-A1- 2006 155 431

## Beschreibung

Die Erfindung betrifft eine Headunit für ein Kraftfahrzeug gemäß dem Oberbegriff des Anspruchs 1.

Aus der WO 2006/125515 A1 ist eine Headunit bekannt, welche die Merkmale des Oberbegriffs des Anspruchs 1 aufweist. Nachteilig an einer derartigen Headunit ist, dass die Funktionalität bzw. Bedienbarkeit der im Fahrzeug vorhandenen Funktionsbauteile bei eingesetztem PDA reduziert ist.

Der Erfindung liegt die Aufgabe zugrunde, eine Headunit zu entwickeln, welche ein modulares System darstellt, dessen Funktionalität bzw. Bedienbarkeit durch ein mobiles elektronisches Gerät erweiterbar ist, ohne durch dessen Verwendung die ohne mobiles elektronisches Gerät vorhandene Funktionalität bzw. Bedienbarkeit einzuschränken, weiterhin ist es Aufgabe der Erfindung das mobile elektronische Gerät optimal in das Fahrzeug einzubinden.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Bei der erfindungsgemäßen Headunit ist das mobile elektronische Gerät mittels wenigstens einem Teil der im Fahrzeug angeordneten Bedienelemente bedienbar ist, wenn das mobile elektronische Gerät drahtlos oder drahtgebunden in Kommunikationsverbindung mit der Dockingstation steht, wobei die ersten, im Kraftfahrtzeug bereits vorhandenen Funktionsbauteile in ihren Grundfunktionen wahlweise über die im Fahrzeug vorhandenen Bedienelemente und über das elektronische Gerät bedienbar sind, wenn das mobile elektronische Gerät drahtlos oder drahtgebunden in Kommunikationsverbindung mit der Dockingstation steht und wobei durch das elektronische Gerät zweite Funktionsbauteile mit Sonderfunktionen, welche durch das mobile elektronische Gerät dem Kraftfahrzeug hinzugefügt werden, wie zum Beispiel Navigation, Telefon, MP3-Player etc. im Kraftfahrzeug verfügbar sind, wenn das mobile elektronische Gerät drahtlos oder drahtgebunden in Kommunikationsverbindung mit der Dockingstation steht. Hierdurch stehen die im Fahrzeug vorhandenen Bedienelemente unabhängig davon, ob das mobile elektronische Gerät in die Headunit eingebunden ist oder nicht, in vollem Umfang für die Bedienung zur Verfügung. Weiterhin sind auch zweite Funktionsbauteile, welche mittels des mobilen elektronischen Geräts in das Kraftfahrzeug bzw. die Headunit des Kraftfahrzeugs implementiert werden, ergänzend und damit komfortabel und angepasst an die für den Betrieb im Verkehr geltenden Bestimmungen bedienbar.

Die Erfindung sieht vor, durch das Befestigen bzw. Andocken des mobilen elektronischen Gerätes das im Kraftfahrzeug vorhandene Display zu überdecken, wobei wenigstens ein Display des mobilen elektronischen Geräts als Anzeige für Informationen, welche in Verbindung mit den ersten Funktionsbauteilen und/oder den zweiten Funktionsbauteilen stehen, nutzbar ist. Hierdurch ist es möglich die Headunit mittels eines mobilen elektronischen Geräts mit einem höherwertigen Display auszustatten, welches größere und/oder umfangreichere Anzeigemöglichkeiten bietet.

Im Sinne der Erfindung wird unter einer Headunit eine Bedieneinheit verstanden, welche Bedienelemente, erste Funktionsbauteile, optionaleine Anzeigeeinrichtung und einen Daten- und/oder Energiebus mit Dockingstation zur Befestigung und/oder Kommunikation mit und/oder Energieversorgung von in die Headunit integrierbaren mobilen elektronischen Geräten umfasst. Diese Headunit ist an einen Fahrzeugbus angeschlossen und stellt die Schnittstelle der Fahrzeugelektronik zum Nutzer dar.

Weitere Einzelheiten der Erfindung werden in der Zeichnung anhand von schematisch dargestellten Ausführungsbeispielen beschrieben.

Hierbei zeigt:
- Figur 1:: eine erfindungsgemäße Headunit ohne mobiles elektronisches Gerät;
- Figur 2:: die in der Figur 1 gezeigte Headunit mit einem zum Einschieben in die Dockingstation positionierten mobilen elektronischen Gerät;
- Figur 3:: die in der Figur 1 gezeigte Headtunit mit einem in der Dockingstation gehaltenen mobilen elektronischen Gerät und
- Figur 4:: die in der Figur 1 gezeigte Headunit mit einem ausschließlich in Funkverbindung mit der Headunit stehendem mobilen elektronischen Gerät.

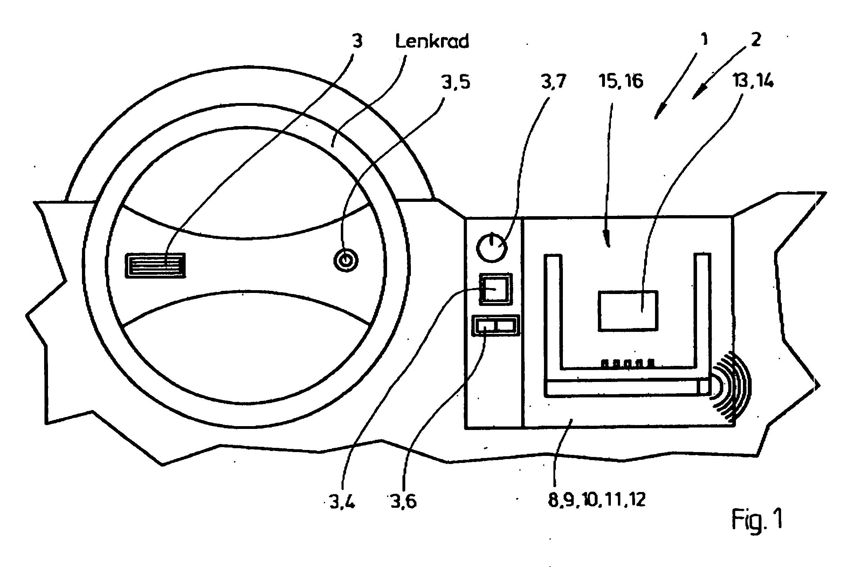

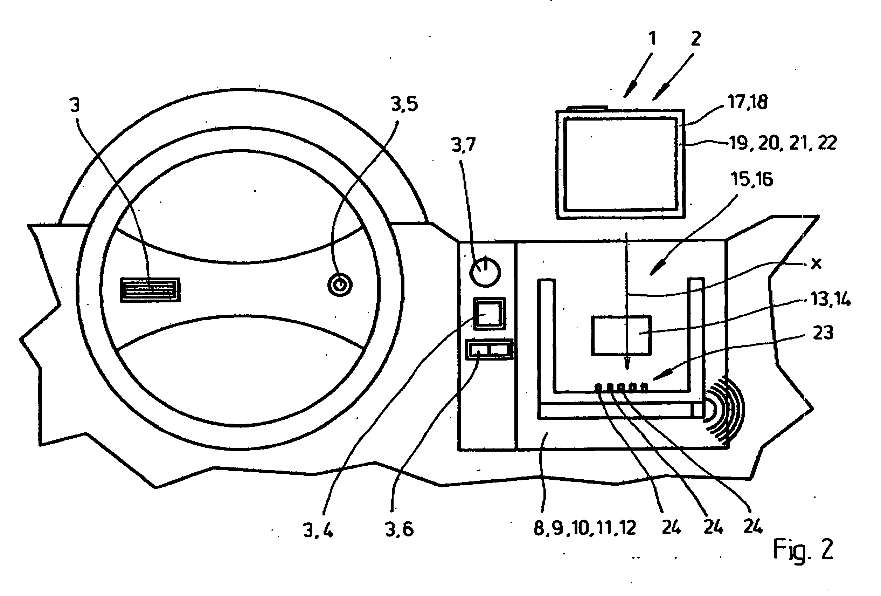

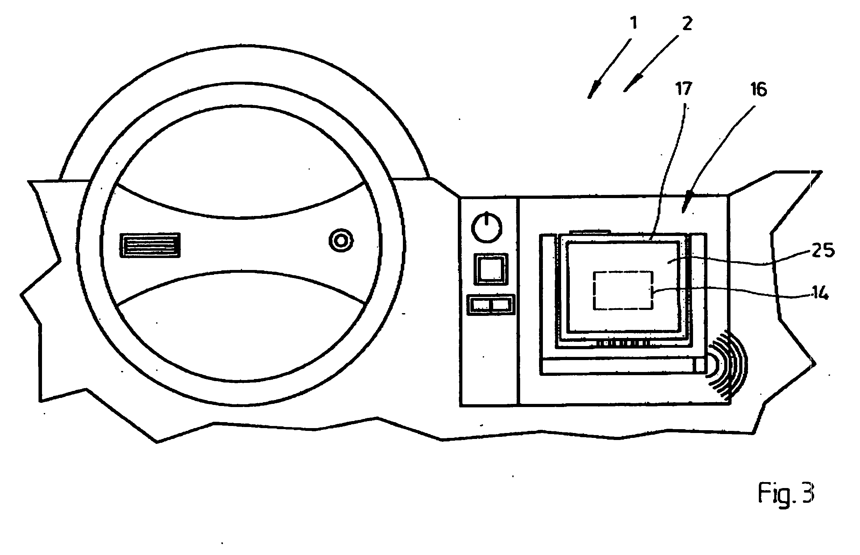

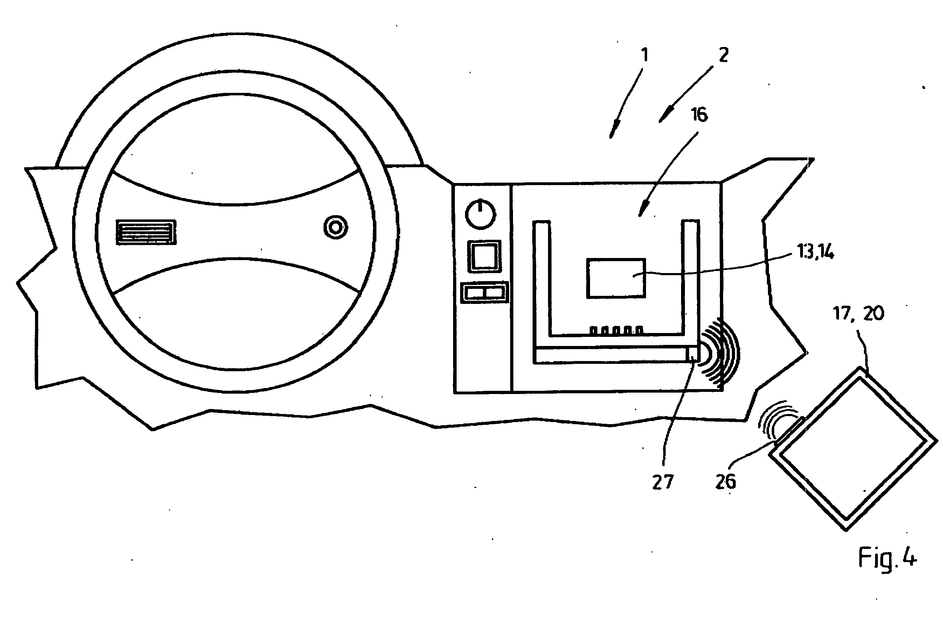

In Figur 1 zeigt eine schematische Ansicht eine Headunit 1 für ein Kraftfahrzeug 2. Die Headunit 1 umfasst Bedienelemente 3 wie Taster 4, Schalter 5, Schaltwippen 6, Drehsteller 7. Weiterhin umfasst die Headunit 1 erste Funktionsbauteile 8 wie Beispiel Radio 9, Bordcomputer 10, Klimaanlage 11, Soundsystem 12 und eine Anzeigeeinrichtung 13 wie zum Beispiel ein Display 14. Schließlich umfasst die Headunit 1 einen Daten- und/oder Energiebus 15 mit Dockingstation 16 zur Befestigung und/oder Kommunikation mit und/oder Energieversorgung von in die Headunit 1 integrierbaren mobilen elektronischen Geräten 17 (siehe Figur 2) insbesondere eines sogenannten Smartphones 18. Die ersten Funktionsbauteile 8 sind mittels der Bedienelemente 3 bedienbar in dem Display 14 sind Informationen anzeigbar, welche in Verbindung mit den ersten Funktionsbauteilen 8 stehen, wie zum Beispiel Name des empfangenen Radiosenders, aktuelle Innenraumtemperatur etc.. Das mobile elektronische Gerät 17 ist mittels wenigstens einem Teil der im Fahrzeug 2 angeordneten Bedienelemente 3 bedienbar, wenn das mobile elektronische Gerät 17 drahtlos (siehe Figur 4) oder drahtgebunden (siehe Figur 3) in Kommunikationsverbindung mit der Dockingstation 16 steht, wobei die ersten Funktionsbauteile 8 in ihren Grundfunktionen wahlweise über die im Kraftfahrzeug 2 vorhandenen Bedienelemente 3 und über das mobile elektronische Gerät 17 bedienbar sind, wenn das mobile elektronische Gerät 17 drahtlos oder drahtgebunden in Kommunikationsverbindung mit der Dockingstation 16 steht und wobei durch das mobile elektronische Gerät 17 zweite Funktionsbauteile 19 mit Sonderfunktionen wie zum Beispiel Navigation 20, Telefon 21, MP3-Player 22 im Kraftfahrzeug 2 verfügbar sind, wenn das mobile elektronische Gerät 17 drahtlos oder drahtgebunden in Kommunikationsverbindung mit der Dockingstation 16 steht.

In der Figur 2 ist dargestellt wie das mobile elektronische Gerät in eine Pfeilrichtung x in die Dockingstation 16 einschiebbar ist. Die Dockingstation 16 weist eine elektrische Schnittstelle 23 mit Kontaktstiften 24 auf, um das mobile elektronische Gerät 17 zu kontaktieren, welches auf die Kontaktstifte 24 ausgerichtete, nicht dargestellte Kontaktplatten aufweist.

In der Figur 3 ist das mobile elektronische Gerät 17 vollständig in die Dockingstation 16 eingeschoben. In der gezeigten Stellung verdeckt das mobile elektronische Gerät 17 mit seinem Display 25 das Display 14.

In der Figur 4 ist eine Ausführungsvariante dargestellt, bei welcher das mobile elektronische Gerät 17 nicht mechanisch in der Dockingstation 16 gehalten wird, sondern drahtlos über eine Funkschnittstelle 26 mit einer Funkschnittstelle 27 der Dockingstation 16 in Verbindung steht. Eine derartige Anwendung ist beispielweise dann vorgesehen, wenn beispielsweise der Beifahrer während der Fahrt mit dem Navigationssystem 20 eine aufwendigere Routenplanung vornimmt.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, dass die Headunit mehrere Dockingstationen aufweist, welche zum Beispiel in einem Kraftfahrzeug dem Fahrer, dem Beifahrer und den Rücksitzplätzen zugeordnet sind. Hierdurch ist es möglich an der ersten Dockingstation ein mobiles elektronisches Gerät einzubinden, welches als zweites Funktionsbauteil eine Navigation in die Headunit integriert und an der zweiten Dockingstation beispielsweise ein als MP3-Player ausgebildetes mobiles Gerät anzudocken. Hierdurch kann insbesondere auch die Möglichkeit geschaffen werden erste Funktionsbauteile des Kraftfahrzeugs wie zum Beispiel die Klimaanlage von verschiedenen Stellen des Kraftfahrzeugs aus zu überwachen und/oder zu bedienen. Gemäß einer Ausführungsvariante ist auch eine virtuelle Integrationen wenigstens eines zweiten mobilen elektronischen Geräts vorgesehen, wobei das zweite und jedes weitere mobile elektronische Gerät drahtlose über die Dockingstation für das erste mobile elektronische Gerät eingebunden werden und mit diesen Informationen zu ersten Funktionsbauteilen abrufbar sind und/oder erste Funktionsbauteile kontrollierbar bzw. steuerbar sind und/oder zweite, im jeweiligen mobilen elektronischen Gerät und/oder in einem anderen mobilen elektronischen Gerät vorhandene zweite Funktionsbauteile kontrollierbar und/oder Informationen zu diesen zweiten Funktionsbauteilen abrufbar sind.

### Bezugszeichenliste:

- 1: Headunit
- 2: Kraftfahrzeug
- 3: Bedienelement
- 4: Taster
- 5: Schalter
- 6: Schaltwippe
- 7: Drehsteller 7
- 8: erstes Funktionsbauteil
- 9: Radio
- 10: Bordcomputer
- 11: Klimaanlage
- 12: Soundsystem
- 13: Anzeigeeinrichtung
- 14: Display
- 15: Daten- und/oder Energiebus
- 16: Dockingstation
- 17: mobiles elektronisches Geräte
- 18: Smartphone
- 19: zweites Funktionsbauteil
- 20: Navigation
- 21: Telefon
- 22: MP3-Player
- 23: elektrische Schnittstelle
- 24: Kontaktstifte
- 25: Display von 17
- 26: Funkschnittstelle von 17
- 27: Funkschnittstelle von 16

## Patentansprüche

1. Headunit (1) für ein Kraftfahrzeug (2), umfassend
- Bedienelemente (3) wie zum Beispiel Taster(4), Schalter (5), Schaltwippen (6), Drehsteller (7) etc.,
- erste Funktionsbauteile (8) wie zum Beispiel Radio (9), Bordcomputer (10), Klimaanlage (11), Soundsystem (12) etc.,
- insbesondere eine Anzeigeeinrichtung (13) wie zum Beispiel ein Display (14),
- einen Daten- und/oder Energiebus (15) mit Dockingstation (16) zur Befestigung und/oder Kommunikation und/oder Energieversorgung von in die Headunit integrierbaren mobilen elektronischen Geräten (17) insbesondere der Konsumelektronik wie zum Beispiel PDAs, Smartphones (19) oder MP3-Player,
- wobei die ersten Funktionsbauteile (8) mittels der Bedienelemente (3) bedienbar sind und
- wobei insbesondere in der Anzeigeeinrichtung (13) Informationen anzeigbar sind, welche in Verbindung mit den ersten Funktionsbauteilen (8) stehen,
- wobei das mobile elektronische Gerät (17) mittels wenigstens einem Teil der im Kraftfahrzeug (2) angeordneten Bedienelemente (3) bedienbar ist, wenn das mobile elektronische Gerät (17) drahtlos oder drahtgebunden in Kommunikationsverbindung mit der Dockingstation (16) steht,
- wobei durch das mobile elektronische Gerät (17) zweite Funktionsbauteile (19) mit Sonderfunktionen wie zum Beispiel Navigation (20), Telefon (21), MP3-Player (22) etc. im Kraftfahrzeug verfügbar sind, wenn das mobile elektronische Gerät (17) drahtlos oder drahtgebunden in Kommunikationsverbindung mit der Dockingstation (16) steht,
**dadurch gekennzeichnet,**
- **dass** die ersten Funktionsbauteile (8) in ihren Grundfunktionen wahlweise über die im Kraftfahrzeug (2) vorhandenen Bedienelemente (3) und über das mobile elektronische Gerät (17) bedienbar sind, wenn das mobile elektronische Gerät (17) drahtlos oder drahtgebunden in Kommunikationsverbindung mit der Dockingstation (16) steht und
- **dass** durch das Befestigen bzw. Andocken des mobilen elektronischen Geräts (17) die im Kraftfahrzeug vorhandene Anzeigeeinrichtung (13) überdeckt wird, wobei wenigstens ein Display (25) des mobilen elektronischen Geräts (17) als Anzeige für Informationen, welche in Verbindung mit den ersten Funktionsbauteilen (8) und/oder den zweiten Funktionsbauteilen (19) stehen, nutzbar ist.

2. Headunit für ein Kraftfahrzeug nach Anspruch 1, **dadurch gekennzeichnet, dass** die zweiten Funktionsbauteile (19) wahlweise über die im Kraftfahrzeug (2) vorhandenen Bedienelemente (3) und über das mobile elektronische Gerät (17) kontrollierbar sind, wenn das mobile elektronische Gerät (17) drahtlos oder drahtgebunden in Kommunikationsverbindung mit der Dockingstation (16) steht.

3. Headunit für ein Kraftfahrzeug nach einem der vorhergehenden Ansprüche, **dadurch gekennzeichnet, dass** das Display (25) des mobilen elektronischen Geräts (17) als berührungssensitives Display (25) ausgebildet ist.

## Claims

1. Head unit (1) for a motor vehicle (2), comprising
- operating elements (3) such as for example scanners (4), switches (5), rocker switches (6), adjusters (7) etc.,
- first functional components (8) such as for example a radio (9), car computer (10), air conditioning (11), sound system (12) etc.,
- in particular an indicator device (13) such as for example a display (14),
- a data and/or energy bus (15) with docking station (16) for the attachment and/or communication and/or power supply of mobile electronic devices (17) which can be integrated into the head unit, in particular consumer electronics such as for example PDAs, smartphones (19) or MP3 players,
- wherein the first functional components (8) can be operated by means of the operating elements (3) and
- wherein in particular information can be displayed in the display device (13), which is in connection with the first functional components (8),
- wherein the mobile electronic device (17) can be operated by means of at least some of the operating elements (3) arranged in the motor vehicle (2), when the mobile electronic device (17) is in wireless or wired communication connection with the docking station (16),
- wherein by means of the mobile electronic device (17) second functional components (19) with special functions such as for example navigation (20), telephone (21), MP3 player (22) etc. are available in the motor vehicle, when the mobile electronic device (17) is in wireless or wired communication connection with the docking station (16),
**characterised in that**
- the first functional components (8) can be operated in their main functions optionally by the operating elements (3) provided in the motor vehicle (2) and can be operated by the mobile electronic device (17), when the mobile electronic device (17) is in wireless or wired communication connection with the docking station (16) and
- **in that** by attaching or docking the mobile electronic device (17) the display device (13) available in the motor vehicle is covered, wherein at least one display (25) of the mobile electronic device (17) can be used as a display for information which is in connection with the first functional components (8) and/or the second functional components (19).

2. Head unit for a motor vehicle according to claim 1, **characterised in that** the second functional components (19) can be controlled optionally by the operating elements (3) provided in the motor vehicle (2) and by the mobile electronic device (17), when the mobile electronic device (17) is in wireless or wired communication connection with the docking station (16).

3. Head unit for a motor vehicle according to any one of the preceding claims, **characterised in that** the display (25) of the mobile electronic device (17) is in the form of a touch-sensitive display (25).

## Revendications

1. Unité de tête (1) pour un véhicule automobile (2) comprenant :
- des éléments d'actionnement (3) tels que par exemple des touches (4), des commutateurs (5), des leviers (6), des boutons tournants (7), etc.,
- des premiers composants fonctionnels (8), tels que par exemple radio (9), ordinateur de bord (10), installation de climatisation (11), système de sonorisation (12), etc.,
- notamment une installation d'affichage (13) comme par exemple un afficheur (14),
- un bus de données et/ou d'énergie (15) avec une embase de réception (16) pour la fixation et/ou la communication et/ou l'alimentation en énergie d'appareils électroniques (17) mobiles qui peuvent être intégrés dans l'unité de tête, notamment de l'électronique de loisir telle que par exemple des PDA, smartphones (19) ou lecteurs MP3,
- les premiers composants fonctionnels (8) étant activés par les éléments de manoeuvre (3), et
- en particulier l'installation d'affichage (13) étant dédiée à afficher des informations liées aux premiers composants fonctionnels (8),
- l'appareil électronique mobile (17) pouvant être commandé à l'aide d'au moins une partie des éléments d'actionnement (3) équipant le véhicule (2) lorsque l'appareil électronique mobile (17) est en liaison de communication sans fil ou par fil avec l'embase de réception (16),
- l'appareil électronique mobile (17) rendant disponible des seconds composants fonctionnels (19) avec des fonctions particulières comme par exemple la navigation (20), le téléphone (21), le lecteur MP3 (22), etc., du véhicule lorsque l'appareil électronique mobile (17) est en liaison de communication sans fil ou par fil avec l'embase de réception (16),
unité **caractérisée en ce que**
- les premiers composants fonctionnels (8) peuvent être actionnés dans leurs fonctions de base au choix par les éléments d'actionnement (3) équipant le véhicule (2) ou par l'appareil électronique mobile (17) lorsque l'appareil électronique mobile (17) est en liaison de communication sans fil ou par fil avec l'embase de réception (16), et
- la fixation ou l'amarrage de l'appareil électronique mobile (17) couvrant l'installation d'affichage (13) équipant le véhicule,
^{*} au moins un afficheur (25) de l'appareil électronique mobile (17) étant utilisable pour afficher les informations liées aux premiers composants fonctionnels (8) et/ou aux seconds composants fonctionnels (19).

2. Unité de tête pour un véhicule automobile selon la revendication 1,
**caractérisée en ce que**
les seconds composants fonctionnels (19) peuvent être commandés au choix par les éléments d'actionnement (3) équipant le véhicule (2), soit par l'intermédiaire de l'appareil électronique mobile (17) lorsque cet appareil électronique mobile (17) est en liaison de communication sans fil ou par fil avec l'embase de réception (16).

3. Unité de tête pour un véhicule automobile selon l'une des revendications précédentes,
**caractérisée en ce que**
l'afficheur (25) de l'appareil électronique mobile (17), est un afficheur tactile (25).
